# EUROPÄISCHE PATENTSCHRIFT

(11) **EP 1 146 102 B1**
(45) Veröffentlichungstag und Bekanntmachung des Hinweises auf die Patenterteilung: **14.07.2004**
(21) Anmeldenummer: 01108852.3
(22) Anmeldetag: 09.04.2001
(51) Int. Cl.: C09J 197/00, C09J 197/02, B27N 3/00, C05F 11/00, E04B 1/74

(54) **Verfahren zur Herstellung einer tanninhaltigen Bindemittelflotte aus Abfallstoffen der Holzindustrie**
Process for the manufacture of a tannin-containing binder liquor obtained from waste of the wood industry
Procédé de fabrication d'une flotte de liant à base de tannins obtenue à partir des déchets de l'industrie du bois

(30) Priorität: 10.04.2000 DE 10017524
(43) Veröffentlichungstag der Anmeldung: 17.10.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: Roffael, Edmone, 38104 Braunschweig (DE); Roffael, Esther, 38104 Braunschweig (DE)
(74) Vertreter: Heusler, Wolfgang, Dipl.-Ing.

(56) Entgegenhaltungen:
- EP-A- 0 492 016
- EP-A- 0 700 762
- CH-A- 361 122
- DE-A- 4 334 422
- DE-A- 19 733 925
- DE-A- 19 751 326
- DE-A- 19 827 179
- US-A- 4 045 386
- PATENT ABSTRACTS OF JAPAN vol. 7, no. 209 (C-186), 14. September 1983 (1983-09-14) & JP 58 109574 A (KUBOTA M.), 29. Juni 1983 (1983-06-29)

## Beschreibung

Die Erfindung betrifft ein Verfahren zur Herstellung einer Bindemittelflotte aus Abfallstoffen der Holzindustrie, nämlich Holzrinden und Gebrauchtmöbel, insbesondere aber Gebrauchtspan- und -faserplatten. Die Erfindung betrifft auch eine Methode zur Herstellung eines kompostierfähigen Gemisches aus Holzfasern und Rinden.

Viele Rinden wie Akazien-, Fichten- und Kiefernrinde enthalten eine große Menge an polyphenolischen Bestandteilen, die unter dem Sammelbegriff Tannine bekannt sind. Tannine, insbesondere die sogenannten kondensierten Tannine, sind chemisch in der Lage, mit dem Formaldehyd zu reagieren und zu dreidimensionalen Polymeren zu vernetzen. Die Tanninformaldehydharze, die aus der Reaktion zwischen dem Formaldehyd und dem Tannin entstehen, können als Bindemittel für Holzwerkstoffe eingesetzt werden. Die Reaktionsgeschwindigkeit zwischen dem Formaldehyd und den kondensierten Tanninen ist pH-abhängig und im pH-Bereich zwischen 7 und 8 besonders hoch. Die Tannine lassen sich aus den Rinden durch Extraktion mit Wasser im neutralen oder alkalischen pH-Bereich bei hohen Temperaturen extrahieren. Es ist auch bekannt, zur Erhöhung der Ausbeute und der Reaktivität für die Extraktion von Tanninen aus den Rinden Harnstoff einzusetzen (DE-OS 19827179).

Holzspanplatten und mitteldichte Faserplatten (MDF), die im Möbelbereich eingesetzt werden, werden in der Regel mit Harnstoffformaldehydharz (UF-Harz) als Bindemittel hergestellt. In Gebrauchtspanplatten lässt sich das Harnstoffformaldehydharz durch Hydrolyse mit Dampf bei Temperaturen zwischen 100 und 170°C teilweise hydrolytisch abbauen. Es sind auch Verfahren bekannt geworden, Holzspäne aus Gebrauchtspanplatten und mitteldichten Faserplatten durch Hydrolyse mit Dampf zurückzugewinnen und die Späne für die Herstellung von neuen Spanplatten einzusetzen (DE-OS 19509152). Während der Hydrolyse von Gebrauchtspanplatten entsteht aus dem Abbau des eingesetzten Harnstoffformaldehydharzes Formaldehyd als Spaltprodukt (DE-OS 19820833). Der freiwerdende Formaldehyd aus aminoplastgebundenen Holzspan- und Faserplatten lässt sich bei hoher Temperatur gemäß der zitierten Patentschrift verringern. Mitteldichte Faserplatten (MDF), aber insbesondere Spanplatten aus Holz und Einjahrespflanzen enthalten außerdem Salze wie Ammoniumnitrat oder Ammoniumsulfat, die bei der Herstellung der Platten als Härtungsbeschleuniger für die eingesetzten Aminoplastharze dienen, jedoch die Zersetzung des eingesetzten Harnstoffformaldehydharzes bei hohen Temperaturen katalysieren.

Des Weiteren ist es bekannt, Rinde und Holz gemeinsam bzw. unentrindetes Holz aufzuschließen zum Zwecke der Zellstoffherstellung. Als Aufschlusschemikalien können bei der Zellstoffherstellung Natriumhydroxid oder Natriumhydroxid in Kombination mit Natriumsulfid und/oder Natriumcarbonat verwendet werden. Bei der Herstellung von Halbzellstoffen nach dem NSSC-Verfahren (Neutral-Sulfit-Semichemical-Pulping) werden in der Regel Mischungen aus Natriumhydroxid und Natriumsulfit als Aufschlusschemikalien eingesetzt (Horn und Auchter "Draft pulping of plywood chips containing bark", Paper Trade Journal 101 (6),1972 sowie Stegmann, Ginzel und Meinecke, Wochenblatt für Papierfabrikation 92, 740-752 (1964) und 93, 41-48 (1965). Die Mitverwendung der Rinde beim Holzauschluss führt jedoch meist zur Abnahme der Ausbeute und des Weißgrades der hergstellten Zellstoffe. Es wird deshalb empfohlen, das Holz vor dem Aufschluss zu entrinden. Die Rinde wird in den Zellstofffabriken und Sägewerken in der Regel verbrannt. Teile der Rinde, insbesondere Nadelholzrinde, werden fermentiert und als Rindenhumus in den Gärtnereien eingesetzt.

Ferner ist es bekannt, Holzfasern, die mit Dampf behandelt und zerfasert worden sind, als Torfersatz einzusetzen. Des Weiteren ist es bekannt, die Hydrolyse der Kohlenhydrate in Holzfasern durch Säurezugabe zu verstärken und die Verschiebung des Verhältnisses von Lignin zu Kohlenhydraten in den Fasern von etwa 1:3 zu etwa 1:2 zu bewirken (Scharpf und Grantzau 1992 im Buch 10 Jahre Gütegemeinschaft "Rinde für Pflanzenbau", Festschrift, S. 106-121). Die auf diese Weise hergestellten Fasersubstrate können allerdings noch eine erhebliche Menge an Stickstoff immobilisieren, da Holz einen relativ niedrigen Stickstoffgehalt aufweist, der im allgemeinen zwischen 0,2 und 0,4 % liegt. Die Verwendung von Industrierestholz als Rohmaterial für die Fasersubstrate und die Anwendung eines energieintensiven Aufschlusses unter Dampfbehandlung führt dazu, dass die Fasersubstrate relativ teuer sind. Solche Fasersubstrate können nach ihrer Herstellung mit Rindenhumus gemischt werden. Es ist ferner bekannt, Holzfasern aus mechanisch zerkleinerten Gebrauchtspanplatten biologisch unter aerobischen Bedingungen zu fermentieren (Marutzky 1995, Recyclingverfahren für Holzwerkstoffe, Vortrag gehalten in Magdeburg am 8.9.1995). Wegen des relativ hohen Stickstoffgehalts in Gebrauchtholzspan- und -holzfaserplatten wird empfohlen, die Spanplattenhäcksel mit stickstoffarmen Verbindungen wie Torf oder Rinde zu mischen. Häcksel aus nur mechanisch zerkleinerten UF-Platten sind weniger als Torfersatz geeignet. Es ist darüber hinaus bekannt, Zerkleinerungsprodukte aus Holzwerkstoffen chemisch aufzuschließen und die entstehende Ablauge als Streckmittel für Bindemittel einzusetzen (DE-PS 4334422C2). Die so erhaltene Ablauge hat jedoch nur eine begrenzte Bindekraft, so dass nur 10 bis 20% an Bindemittel ersetzt werden können.

Aus der EP-A-700762 ist ein Verfahren zur Herstellung von tanningebundenen Span- und Faserplatten aus bereits hergestellten alten Span- und Faserplatten bekannt, wobei der für die Vernetzung des Tannins notwendige Formaldehyd dem hydrolytischen Abbau des in den alten Span- und Faserplatten vorhandenen Bindemittels entstammt und während des Pressvorgangs erfolgt.

Aus der DE-A-1971327 ist es zur Vermeidung eines aufwendigen thermohydrolytischen oder chemischen Aufschlusses bei der Rückgewinnung von Spänen aus mit Aminoplastharz gebundenen Gebrauchtspanplatten bekannt, die Gebrauchtholzspanplatten bzw. Holzfaserplatten mechanisch zu zerkleinern, die entstehenden Holzteilchen mit einem Säureamid zu behandeln und anschließend in üblicher Weise mit einem Bindemittel zu versehen. Als Säureamid wird u.a. Harnstoff vorgeschlagen.

Aus der CH-A-361122 ist es bekannt, bei der Herstellung von Wärme- und Schallisolierplatten wasserhaltige Rinde gemeinsam mit Hilzabfällen zu verwerten. Hierfür wird die nasse Rinde bis zur schmierigen Konsistenz intensiv gemahlen und das schmierige Mahlgut als Bindemittel mit Holzabfällen vermischt, zu einer plastischen Masse verformt und kontinuierlich extrudiert. Vorteilhaft soll auch Abfallrinde nach der Gerbstoffextraktion (ohne Tannine) verarbeitet werden.

Aus der JP-A-58109574 ist es bekannt, Rinde mit Wasser oder Alkali zu behandeln, den erhaltenen Extrakt mit Formaldehyd zur Reaktion zu bringen, anschließend das Reaktionsgemisch durch Säurezugabe neutral einzustellen und anschließend den erhaltenen Rückstand als Holzbindemittel einzusetzen.

Der Erfindung liegt die Aufgabe zugrunde, eine reaktive Bindemittelflotte herzustellen, die für sich allein als Bindemittel oder unter Hinzufügen einer kleinen Menge von anderen Bindemitteln zur Herstellung von Holzwerkstoffen geeignet ist. Ferner ist Aufgabe der Erfindung, in einem Schritt aus der Rinde und den Holzfasern ein Substrat herzustellen, das gegebenenfalls ohne Kompostierung als Humus wirkt. Diese Aufgabe wird durch die in den Patentansprüchen angegebenen Merkmale gelöst.

Es wurde nun überraschend gefunden, dass die Herstellung von Holzfaserkultursubstraten mit der Rindenextraktion in äußerst sinnvoller Weise kombiniert werden kann, wenn man die Holzzerkleinerungsprodukte aus Gebrauchtspan- und -faserplatten, die mit Aminoplastharzen gebunden sind, gemeinsam mit tanninhaltigen Rinden mit Wasser bzw. mit Dampf bei Temperaturen oberhalb von 70°C behandelt. Die Extraktion lässt sich durch Einstellen des pH-Wertes und der Temperatur der wässerigen Lösung steuern. Hierdurch werden die Polyphenole aus der Rinde in besonders hoher Ausbeute aus der Rinde extrahiert und gehen in Lösung und darüber hinaus wird ein erheblicher Teil des in Gebrauchtspanplatten vorhandenen Harnstoffformaldehydharzes abgebaut und wasserlöslich. Auch der in den Gebrauchtspanplatten noch vorhandene freie Harnstoff geht in Lösung und erhöht die Ausbeute an extrahierbaren polyphenolischen Bestandteilen aus der Rinde. Des Weiteren wurde ebenfalls überraschend festgestellt, dass der aus den gebrauchten Spanplatten frei werdende Formaldehyd mit den Extraktstoffen der Rinde bereits während des Aufschlusses reagiert. Dies führt zum einen dazu, dass keine Formaldehydemission aus den gebrauchten Spanplatten während des Aufschlusses stattfindet, da zum einen die Rinde und ihre Extraktstoffe als Formaldehydfänger dienen und zum anderen die Menge an Formaldehyd, die nachträglich für die Herstellung von Tanninformaldehydharzen aus den Polyphenolen der Rinde gewonnen wird, sich dementsprechend erheblich verringert oder sogar entfällt. Des Weiteren reagiert das Bindemittel mit der Rinde derart, dass der Stickstoffgehalt der Rinde wesentlich erhöht wird. Für bestimmte Verwendungszwecke, wie z.B. für die Herstellung von Dämmplatten, reicht die Bindekraft der Leimflotte völlig aus. Selbstverständlich können anstelle von Rinde andere tanninhaltige Lignocellulosen wie Quebrachoholz und Eichenholz für die kombinierte Extraktion eingesetzt werden. Der nach dem Aufschluss bleibende Rindenrückstand enthält 2-4 mal mehr Stickstoff als die ursprünglich eingesetzte Rinde. Insofern wird die Rinde durch den gemeinsamen Aufschluss mit Gebrauchtholzwerkstoffen mit Stickstoff angereichert und braucht nicht mehr mit Stickstoffverbindungen bzw. mit Harnstoff nachträglich behandelt zu werden.

Neben Rinde und Gebrauchtholzwerkstoffen kann auch Altpapier mit aufgeschlossen werden.

Der hier beschriebene Aufschluss kann zweckmäßig im pH-Bereich von 2 bis 14 stattfinden und mehrstufig im Kaskadenbetrieb und/oder in einem Extruder erfolgen.

Den aufzuschließenden Stoffen können in besonderen Fällen vor, während oder nach dem Aufschluss Formaldehyd oder andere mit Polyphenolen kondensierbare Aldehyde zugegeben werden.

Die bei dem hydrothermischen Aufschluss anfallende Bindemittelflotte kann zweckmäßig als Streckmittel für Holzwerkstoff-Bindemittel, insbesondere für Harnstoff-Formaldehyd-Harze, Phenol-Formaldehydharze, Tanninformaldehydharze und polymeres Diisocyanat verwendet werden. Der bei thermo-hydrolytischem Aufschluss zurückbleibende Rückstand kann dagegen vorteilhaft als Bodenverbesserungsmittel oder auch als Rohstoff für Holzwerkstoffe und insbesondere für Dämmplatten und mitteldichte Faserplatten (MDF) verwendet werden.

Die Bindemittelflotte kann für die Herstellung von Spanplatten und MDF-Platten eingesetzt werden. Im Falle der Herstellung von MDF-Platten kann das Bindemittel direkt und ohne aufkonzentriert (eingedickt) zu werden in die Blow-Line-Anlage eingedüst werden, also in das üblicherweise in MDF-Anlagen zum Eindüsen des Bindemittels vorhandene Rohr.

Die folgenden Beispiele sollen die Erfindung erläutern, ohne sie einzuschränken:

### Beispiel 1:

1000 g Fichtenrinde wurden mit 1000 g grob zerkleinerten aminoplastgebundenen mitteldichten Holzfaserplatten zusammengemischt und mit 8000 g einer 5 %igen Natriumhydroxidlösung versetzt. Die Mischung wurde anschließend auf eine Temperatur von 170°C erhitzt und bei dieser Temperatur für eine Stunde unter Druck aufgeschlossen. Die nach dem Aufschluss erhaltene "Ablauge" wurde auf einen Feststoffgehalt von 40 % eingedickt. Die so erhaltene Leimflotte hatte eine Gelierzeit von 80 s bei 90°C bei einer Zugabe von 10 % Formaldehyd (bezogen auf den Feststoff der Leimflotte). Die Ausbeute bezogen auf Rinde lag bei 32 %.

In einem Vergleichsversuch wurde anstelle einer Mischung aus Rinde und gebrauchten Faserplatten nur Fichtenrinde unter den gleichen Bedingungen aufgeschlossen. Die nach dem Auschluss erhaltene Ablauge wurde auf eine Stoffdichte von 40 % eingedickt. Die so erhaltenen Leimflotte hatte eine Gelierzeit von 100 s bei 90°C bei einer Zugabe von 10 % Formaldehyd (bezogen auf den Feststoffgehalt der Leimflotte).

### Beispiel 2:

1000 g Fichtenrinde wurden mit 1000 g Zerkleinerungsprodukt von gebrauchten mitteldichten Holzfaserplatten zusammengemischt. Dem Gemisch wurden 8000 g Wasser zugegebenen. Die Mischung wurde anschließend auf eine Temperatur von 190°C erhitzt und bei dieser Temperatur für 1 h aufgeschlossen. Die nach dem Aufschluss erhaltene Ablauge wurde auf einen Feststoffgehalt von 40 % eingedickt. Die so erhaltene Ablauge bzw. Flotte hatte eine Gelierzeit von 120 s bei 90°C nach Zugabe von 10 % Formaldehyd (bezogen auf den Feststoff der Leimflotte). In einem Vergleichsversuch wurde die Rinde allein mit Wasser unter den gleichen Bedingungen aufgeschlossen. Die nach dem Aufschluss erhaltene Leimflotte wurde auf einen Feststoffgehalt von 40 % eingedickt. Die Leimflotte hatte bei einer Zugabe von 10 % Formaldehyd (bezogen auf Feststoff der Leimflotte) eine Gelierzeit bei 90°C von 145 s. Durch diese Behandlung stieg der Stickstoffgehalt der Rinde von 0,4 % vor dem Aufschluss auf 0,6 % nach dem Aufschluss.

Aus den Ergebnissen der aufgeführten Beispiele wird ersichtlich, dass das gemeinsame Aufschließen der mit Aminoplastharzen gebundenen gebrauchten Holzfaserplatten mit der Fichtenrinde die Reaktivität der Leimflotte gegenüber dem alleinigen Aufschluss erhöht und die Ausbeute bezogen auf die eingesetzte Rinde steigt.

### Beispiel 3:

Der aus Beispiel 2 nach dem Aufschluss erhaltene Rückstand aus Rinde und Faserstoff wurde zerfasert und anschließend zu einer Rohdichte von 150 g/cm³ vorverdichtet. Die so erhaltene Fasermatte wurde anschließend bei einer Temperatur von 170°C nachgetrocknet. So zeigt sich, dass die so hergestellten Faserformteile einen guten Zusammenhalt aufweisen und als Dämmstoff eingesetzt werden können.

## Patentansprüche

1. Verfahren zur Herstellung einer Bindemittelflotte aus tanninhaltigen Rinden, **dadurch gekennzeichnet, dass** die Rinden gemeinsam mit Zerkleinerungsprodukten von mit Aminoplastharzen gebundenen Gebrauchtholzwerkstoffen, insbesondere Gebrauchtfaser- und -spanplatten, bei Temperaturen von mindestens 70°C im wässerigen Medium aufgeschlossen werden.

2. Verfahren nach Anspruch 1, **dadurch gekennzeichnet, dass** der Aufschluss im pH-Bereich von 2-14 stattfindet.

3. Verfahren nach einem der vorhergehenden Ansprüche, **dadurch gekennzeichnet, dass** der Aufschluss mehrstufig im Kaskadenbetrieb erfolgt.

4. Verfahren nach einem der vorgehenden Ansprüche, **dadurch gekennzeichnet, dass** der Aufschluss in einem Extruder stattfindet.

5. Verfahren nach einem der Ansprüche 1 bis 4, **dadurch gekennzeichnet, dass** neben Rinde und Gebrauchtholzwerkstoffen auch Altpapier mit aufgeschlossen wird.

6. Verfahren nach Anspruch 1, **dadurch gekennzeichnet, dass** vor, während oder nach dem Aufschluss Formaldehyd oder andere mit Polyphenolen kondensierbare Aldehyde zugegeben werden.

7. Verwendung der bei dem hydrothermischen Aufschluss gemäß Anspruch 1 hergestellten Bindemittelflotte als Streckmittel für Holzwerkstoff-Bindemittel, insbesondere für Harnstoff-Formaldehyd-Harze, Phenol-Formaldehydharze, Tanninformaldehydharze und polymeres Diisocyanat.

8. Verwendung des bei thermo-hydrolytischem Aufschluss gemäß Anspruch 1 zurückbleibenden Rückstandes als Bodenverbesserungsmittel.

9. Verwendung des bei thermo-hydrolytischen Aufschluss gemäß Anspruch 1 zurückbleibenden Rückstandes als Rohstoff für Holzwerkstoffe, insbesondere Dämm- und mitteldichte Faserplatten(MDF).

10. Verwendung der nach Anspruch 1 hergestellten Bindemittelflotte zur Herstellung von mitteldichten Faserplatten (MDF), **dadurch gekennzeichnet, dass** die erhaltene Leimflotte direkt in die Blow-Line einer MDF-Anlage befördert wird.

11. Verwendung der nach Anspruch 1 hergestellten Bindemittelflotte als Leimflotte für die Herstellung von Dämmplatten.

## Claims

1. A method of manufacturing a binder liquor from tannin-containing bark, **characterised in that** the bark is hydrolysed together with comminution products of used wood materials, particularly used fibre and chip boards, bonded with aminoplast resins at temperatures of at least 70°C in an aqueous medium.

2. A method as claimed in Claim 1, **characterised in that** the hydrolysis occurs in a pH range of 2-14.

3. A method as claimed in one of the preceding claims, **characterised in that** the hydrolysis occurs in a plurality of stages in cascade operation.

4. A method as claimed in one of the preceding claims, **characterised in that** the hydrolysis occurs in an extruder.

5. A method as claimed in one of Claims 1 to 4, **characterised in that** waste paper is also hydrolysed in addition to bark and used wood materials.

6. A method as claimed in Claim 1, **characterised in that** formaldehyde or another aldehyde which may be condensed with polyphenols is added before, during or after the hydrolysis.

7. Use of the binding liquor manufactured by hydrothermal hydrolysis as claimed in Claim 1 as a diluent for wood material binders, particularly for urea-formaldehyde resins, phenol-formaldehyde resins, tannin formaldehyde resins and polymeric diisocyanate.

8. Use of the residue remaining in thermo-hydrolytic hydrolysis as claimed in Claim 1 as a ground improvement agent.

9. Use of the residue remaining in thermo-hydrolytic hydrolysis as claimed in Claim 1 as a raw material for wood materials, particularly insulating and medium density fibre boards (MDF).

10. Use of the binder liquor produced in accordance with Claim 1 for manufacturing medium density fibre boards (MDF), **characterised in that** the adhesive liquor which is produced is conveyed directly into the blow-line of an MDF installation.

11. Use of the binder liquor produced in accordance with Claim 1 as adhesive liquor for manufacturing insulating boards.

## Revendications

1. Procédé de réalisation d'un bain de liants à partir d'écorces contenant du tanin, **caractérisé en ce que** les écorces sont dissoutes dans un milieu aqueux, à des températures d'au moins 70 °C, avec des produits résultant de la fragmentation de matériaux de vieux bois liés avec des résines aminoplastiques, en particulier de vieux panneaux de fibres et de particules.

2. Procédé selon la revendication 1, **caractérisé en ce que** la dissolution a lieu dans le domaine de pH compris entre 2 et 14.

3. Procédé selon l'une des revendications précédentes, **caractérisé en ce que** la dissolution s'effectue en cascade en plusieurs étapes.

4. Procédé selon l'une des revendications précédentes, **caractérisé en ce que** la dissolution a lieu dans une extrudeuse.

5. Procédé selon l'une des revendications 1 à 4, **caractérisé en ce qu'**outre les écorces et les matériaux de vieux bois, on dissout aussi des vieux papiers.

6. Procédé selon la revendication 1, **caractérisé en ce qu'**avant, pendant ou après la dissolution, on ajoute du formaldéhyde ou d'autres aldéhydes condensables avec des polyphénols.

7. Utilisation du bain de liants réalisé lors de la dissolution hydrothermique selon la revendication 1, comme diluant pour liants de matériau de bois, en particulier pour résines urée-formaldéhyde, résines phénol-formaldéhyde, résines tanin-formaldéhyde et diisocyanate polymère.

8. Utilisation du résidu de la dissolution thermohydrolytique selon la revendication 1, comme produit d'amendement du sol.

9. Utilisation du résidu de la dissolution thermohydrolytique selon la revendication 1, comme matière première pour matériaux de bois, en particulier panneaux de fibres isolants et de densité moyenne (MDF).

10. Utilisation du bain de liants réalisé selon la revendication 1, pour fabriquer des panneaux de fibres de densité moyenne (MDF), **caractérisée en ce que** le bain de colle obtenu est directement transporté dans la blow-line d'une installation pour panneaux de fibres de densité moyenne.

11. Utilisation du bain de liants réalisé selon la revendication 1, comme bain de colle pour la fabrication de panneaux isolants.
